Europäisches Patentamt

European Patent Office

Office européen des brevets

(11) Numéro de publication: **0 228 931**
**A1**

(12) # DEMANDE DE BREVET EUROPEEN

(21) Numéro de dépôt: 86402565.5

(22) Date de dépôt: 19.11.86

(51) Int. Cl.⁴: **G 03 B 21/56**
**E 04 B 1/32**

(30) Priorité: 19.11.85 FR 8517054

(43) Date de publication de la demande:
15.07.87 Bulletin 87/29

(84) Etats contractants désignés: **DE ES GB IT NL**

(71) Demandeur: **Chamayou, Gérard**
**93, rue Broca**
**F-75013 Paris (FR)**

(72) Inventeur: **Chamayou, Gérard**
**93, rue Broca**
**F-75013 Paris (FR)**

(74) Mandataire: **Nony, Michel et al**
**Cabinet NONY & CIE 29, rue Cambacérès**
**F-75008 Paris (FR)**

(54) Ecran courbe, notamment écran de projection cinématographique.

(57) Ecran courbe, notamment écran de projection cinématographique.

L'invention est relative à un écran courbe, notamment écran de projection cinématographique.

Il comprend une structure géodésique porteuse, une ossature secondaire réticulée fixée aux noeuds de la structure porteuse, et des éléments polygonaux cintrés (4) montés sur l'ossature secondaire, les éléments polygonaux adjacents ayant leurs bords se chevauchant.

Fig. 1

EP 0 228 931 A1

**Description**

Ecran courbe, notamment écran de projection cinématographique.

La présente invention concerne un écran courbe, notamment un écran de projection cinématographique ou de planétarium.

On connaît déjà des écrans de projection cinématographique courbes, et plus particulièrement sphériques.

On connaît également, par exemple à partir du document FR-A-2 540 536, des dômes dits géodésiques dans lesquels des éléments de couverture sont montés bord à bord sur une structure porteuse réticulée.

On peut envisager d'utiliser la technique de ces dômes géodésiques pour la réalisation d'écrans courbes, mais ceci se révèle relativement inadapté dans la mesure où il existe toujours un espace, même très mince, entre les bords de deux éléments de couverture, et que cet espace apparaît comme une ligne sombre lorsque l'écran est éclairé.

La présente invention vise à fournir un écran courbe dont les joints entre éléments sont invisbles lorsque l'écran est éclairé.

A cet effet, l'invention a pour objet un écran courbe, notamment un écran de projection cinématographique, caractérisé par le fait qu'il comprend une structure géodésique porteuse, une ossature secondaire réticulée fixée aux noeuds de la structure porteuse, et des éléments polygonaux cintrés montés sur l'ossature secondaire, les éléments polygonaux adjacents ayant leurs bords se chevauchant.

Contrairement à ce qui se produit dans le cas d'une liaison bord à bord des éléments, la liaison avec chevauchement est pratiquement invisible lorsque l'écran est éclairé. Par ailleurs, la structure géodésique porteuse assure une très grande précision à l'assemblage, de l'ordre de quelques dixièmes de millimètres entre deux noeuds.

Dans un mode de réalisation particulier de l'invention, les éléments polygonaux peuvent être des éléments triangulaires, par exemple groupés par quatre pour former des panneaux préfabriqués eux-mêmes triangulaires.

Pour assurer le chevauchement, dans ce dernier cas, certains panneaux peuvent avoir, sur au moins un de leurs bords, leurs éléments triangulaires qui dépassent de l'ossature secondaire.

Cette ossature secondaire peut être formée de profilés courbes en L et/ou en T sur lesquels les éléments polygonaux sont rivetés.

De manière à éviter des surépaisseurs trop importantes, on peut prévoir, aux points de jonction entre six éléments triangulaires, trois éléments ayant leur sommet en contact, intercalés avec trois éléments chevauchants dont les sommets sont découpés, de manière à obtenir au maximum une double épaisseur desdits éléments.

Les éléments polygonaux de l'écran peuvent par exemple être réalisés en tôle perforée, auquel cas une bande d'un matériau de couleur sombre est avantageusement intercalée entre lesdits éléments et l'ossature secondaire.

On évite ainsi de faire apparaître la structure de support sous la forme de bandes claires lorsque l'écran est éclairé.

Avantageusement, les éléments cintrés sont emboutis.

On décrira maintenant à titre d'exemple non limitatif, un mode de réalisation particulier de l'invention, en référence aux dessins schématiques annexés dans lesquels :

- la figure 1 représente un panneau d'écran courbe réalisé selon la présente invention,
- la figure 2 représente la liaison entre deux panneaux,
- la figure 3 est une coupe selon la ligne III-III de la figure 1,
- la figure 4 est une coupe selon la ligne IV-IV de la figure 2, et
- les figures 5a à 5c illustrent schématiquement la jonction entre six éléments d'écran, et
- la figure 6 illustre le montage d'un panneau sur la structure géodésique porteuse.

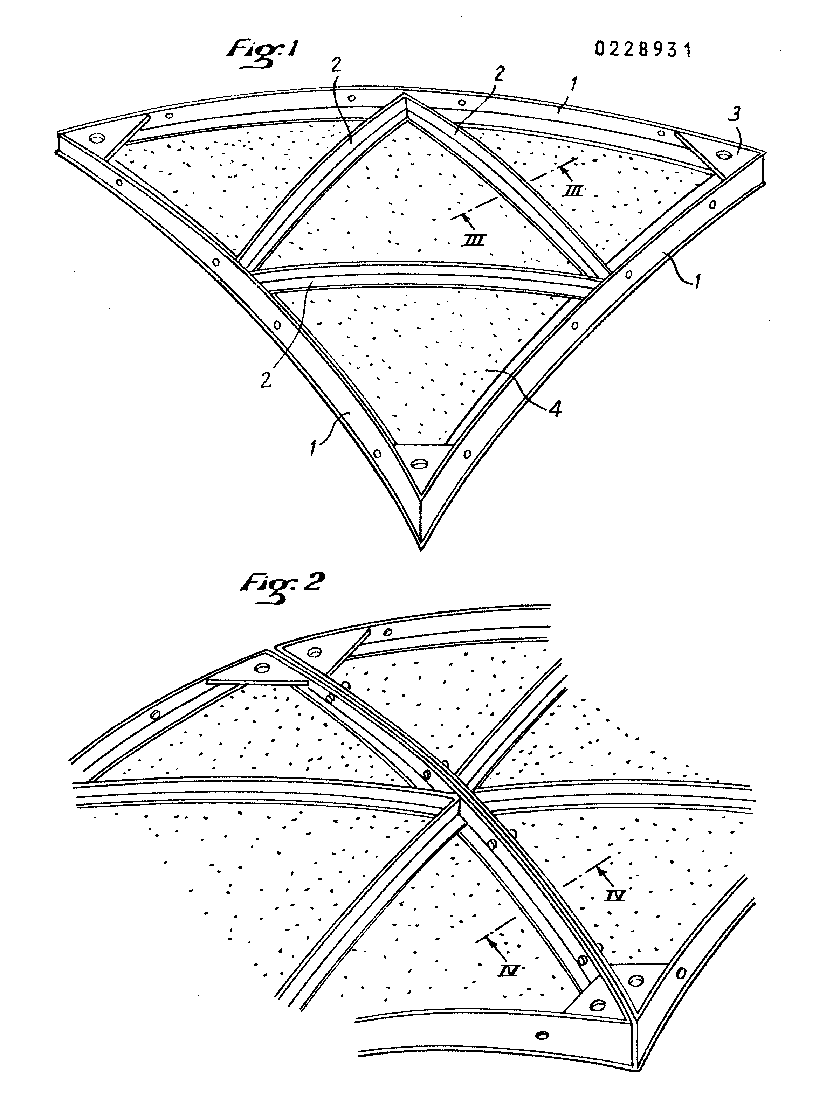

La figure 1 représente un panneau préfabriqué présentant généralement la forme d'un triangle sphérique équilatéral délimité par trois profilés 1 en L. Trois autres profilés en T, 2 délimitent avec les profilés 1, quatre triangles équilatéraux. Les profilés 1 et 2 sont courbés au rayon de courbure de l'écran,

Les profilés 1 et 2 forment l'ossature secondaire de l'écran.

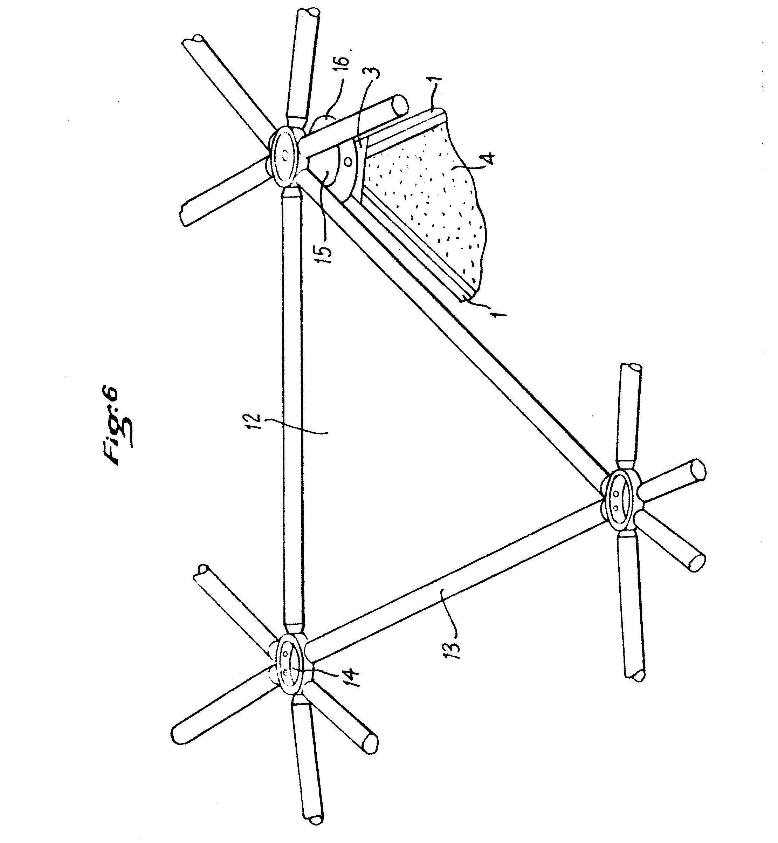

Aux trois coins du triangle sphérique équilatéral 1 sont prévus des moyens de fixation 3 à une structure porteuse qui sera décrite en référence à la figure 6.

L'écran proprement dit est réalisé par assemblage d'éléments triangulaires 4 en tôle perforée montés comme cela sera décrit ci-après sur la structure de support constituée par les profilés 1 et 2.

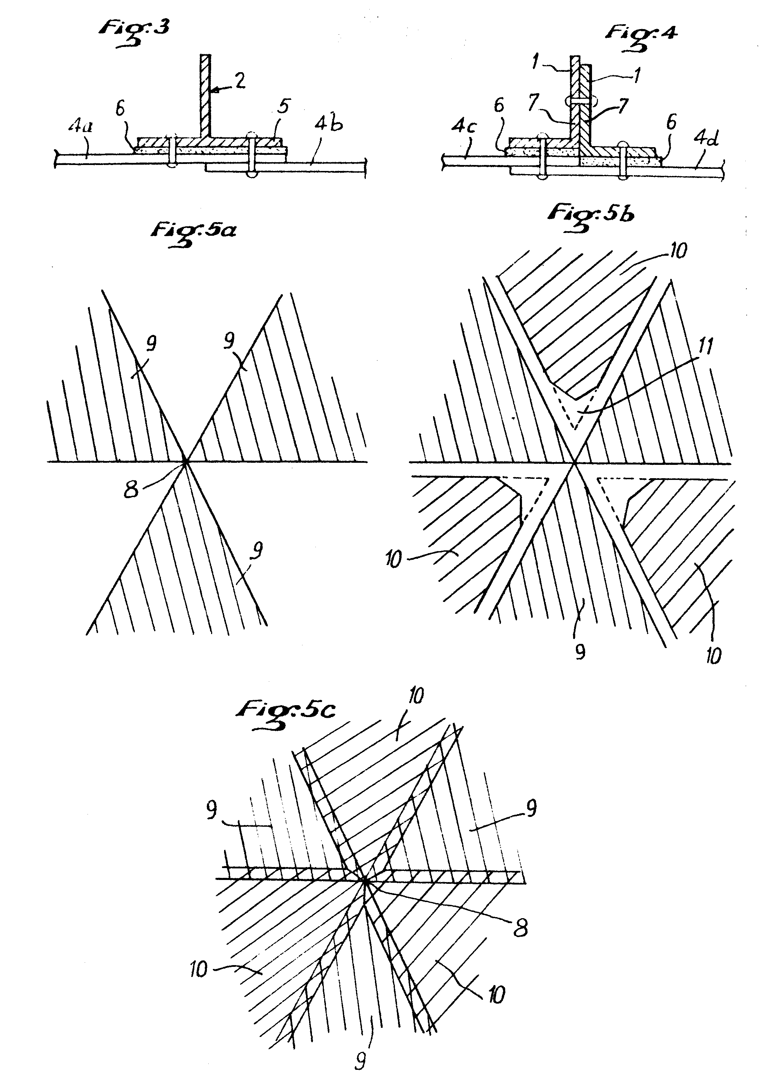

Au niveau des profilés 2, comme cela est représenté sur la figure 3, l'un des éléments 4a est riveté sur toute la largeur de la base 5 du T, de sorte que l'autre élément 4b, riveté par exemple sur la moitié de la largeur de la base 5, chevauche l'élément 4a.

On remarque en outre qu'une bande de matériau sombre 6, par exemple une bande en matière plastique, est intercalée entre l'élément 4à et la base 5 du T de manière que cette base n'apparaîsse pas au travers des perforations des éléments 4a et 4b.

La figure 4 montre que certains panneaux préfabriqués ont, sur leurs bords, l'élément 4c qui arrive à l'aplomb de l'aile 7 du profilé 1 alors que d'autres panneaux ont sur leurs bords l'élément 4d qui déborde de cette aile 7. Dans les deux cas, une bande de matériau sombre 6 est intercalée entre les éléments 4 et la base du profilé.

Les profilés 1 de deux panneaux adjacents sont rivetés par leurs ailes, en prévoyant un léger décalage de manière que l'élément 4d qui dépasse de son profilé respectif chevauche l'élément 4c qui arrive à l'ap'omb de son profilé 1.

Ainsi, aussi bien au niveau d'un panneau individuel (figure 3) qu'au niveau de la liaison entre deux panneaux (figure 4), le chevauchement des éléments 4 est assuré.

Les figures 5a à 5c représentent la jonction entre six éléments ou six panneaux à leur sommet 8.

Trois éléments 9 sont d'abord mis en place (figure 5a) avec leur sommet en contact en 8.

Des éléments 10 sont ensuite intercalés entres les panneaux (figure 5b), les éléments 10 ayant leur sommet 11 tronqué.

Les éléments 10 sont ensuite assemblés (figure 5c) de manière que leurs bords chevauchent les bords des éléments 9. Toutefois, du fait que les éléments 10 ont leur sommet tronqué en 11, on constate sur la figure 5c que ces sommets se juxtaposent les uns à côté des autres, de sorte qu'en aucun emplacement au voisinage du point 8, on ne trouve une épaisseur supérieure au double de l'épaisseur d'un élément.

La figure 6 représente une structure porteuse constituant une partie d'un dôme sphérique formé de 20 triangles équilatéraux sphériques identiques divisés chacun en cent triangles de base 12.

Les triangles de base sont formés de tubes 13 assemblés par six en des noeuds 14.

Chaque noeud 14 reçoit une broche 15 supportant une platine 16 sur laquelle sont vissés les moyens de fixation 3 précités.

Les éléments 4 sont donc reliés, par l'intermédiaire de l'ossature secondaire constituée par les profilés 1 et 2, à la structure porteuse, ce qui permet d'atteindre la précision souhaitée pour la position relative des éléments 4 entre eux.

Diverses variantes et modifications peuvent bien entendu être apportées à la description qui précède sans sortir pour autant du cadre ni de l'esprit de l'invention.

## Revendications

1 - Ecran courbe, notamment écran de projection cinématographique, caractérisé par le fait qu'il comprend une structure géodésique porteuse, une ossature secondaire réticulée fixée aux noeuds de la structure porteuse, et des éléments polygonaux cintrés (4) montés sur l'ossature secondaire, les éléments polygonaux adjacents ayant leurs bords se chevauchant.

2 - Ecran selon la revendication 1, caractérisé par le fait que les éléments polygonaux sont des éléments triangulaires.

3 - Ecran selon la revendication 2, caractérisé par le fait que lesdits éléments triangulaires sont groupés par 4 pour former des panneaux préfabriqués eux-mêmes triangulaires.

4 - Ecran selon la revendication 3, caractérisé par le fait que certains panneaux ont, sur au moins un de leurs bords, leurs éléments triangulaires qui dépassent de l'ossature secondaire.

5 - Ecran selon l'une quelconque des revendications 1 à 4, caractérisé par le fait que l'ossature secondaire est formée de profilés en L et/ou en T.

6 - Ecran selon l'une quelconque des revendications 2 à 5, caractérisé par le fait qu'au point de jonction entre six éléments triangulaires, trois éléments (9) dont les sommets sont en contact sont intercalés avec trois éléments (10) chevauchants dont les sommets sont découpés de manière à obtenir au maximum une double épaisseur desdits éléments.

7 - Ecran selon l'une quelconque des revendications 1 à 6, caractérisé par le fait que lesdits éléments sont réalisés en tôle perforée.

8 - Ecran selon la revendication 7, caractérisé par le fait qu'une bande (6) d'un matériau de couleur sombre est intercalée entre lesdits éléments et l'ossature secondaire.

9 - Ecran selon l'une quelconque des revendications 1 à 8, caractérisé par le fait que lesdits éléments sont emboutis.

*Fig. 1*

0228931

*Fig. 2*

*Fig.3*

*Fig.4*

*Fig.5a*

*Fig.5b*

*Fig.5c*

Fig:6

0228931

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 348 897 (J. HOURDIAUX) <br> * Colonnes 2,3; figures 1-8 * | 1 | G 03 B 21/56 <br> E 04 B 1/32 |
| | --- | | |
| A | DE-A-2 232 114 (M. MENGERINGHAUSEN) <br> * Pages 14-16; figures 1,8-20 * | 1,2 | |
| | --- | | |
| D,A | FR-A-2 540 536 (G. CHAMAYOU) <br> * Pages 2,3; figures 1-6 * | 1-3,9 | |
| | --- | | |
| A | FR-A-1 590 144 (P. FAUCHEUX) <br> * Page 2; figures 1-6 * | 1-3,9 | |
| | --- | | |
| A | US-A-2 978 074 (C.J. SCHMIDT) <br> * Colonnes 2,3; figures 1-5 * | 1-3,9 | DOMAINES TECHNIQUES RECHERCHES (Int. Cl.4) |
| | --- | | |
| A | FR-A-2 219 286 (STAR MANUFACTURING CO. OF OKLAHOMA) <br> * Pages 18,19; figures 11-15 * | 1,2,4 | G 03 B 21/56 <br> G 03 B 21/58 <br> E 04 B 1/32 <br> E 04 B 7/10 |
| | ----- | | |

Le présent rapport de recherche a été établi pour toutes les revendications

| Lieu de la recherche | Date d'achèvement de la recherche | Examinateur |
|---|---|---|
| LA HAYE | 25-02-1987 | BOEYKENS J.W. |